Europäisches Patentamt

European Patent Office

Office européen des brevets

(11) Veröffentlichungsnummer: **0 231 431**
**B1**

(12) **EUROPÄISCHE PATENTSCHRIFT**

(45) Veröffentlichungstag der Patentschrift:
**10.01.90**

(21) Anmeldenummer: **86112015.2**

(22) Anmeldetag: **29.08.86**

(51) Int. Cl.⁴: **G 01 K 1/12**, G 01 P 9/18,
F 27 D 21/00

(54) **Messwerterfassungseinrichtung.**

(30) Priorität: **20.12.85 DE 3545215**

(43) Veröffentlichungstag der Anmeldung:
**12.08.87 Patentblatt 87/33**

(45) Bekanntmachung des Hinweises auf die Patenterteilung:
**10.01.90 Patentblatt 90/2**

(84) Benannte Vertragsstaaten:
**AT BE CH DE FR GB IT LI LU NL SE**

(56) Entgegenhaltungen:
DE-A- 2 720 177
FR-A- 2 215 134
FR-A- 2 219 405
US-A- 4 160 255

GAS WÄRME INTERNATIONAL, Band 28, Nr. 6/7,
Juni/Juli 1979, Seiten 411-415; H.H.EMSCHERMANN et
al.: "Temperaturmessungen in Durchlauföfen mit dem
EFH-Messwert-Speicherverfahren"

(73) Patentinhaber: **DIDIER-WERKE AG,**
**Lessingstrasse 16-18, D-6200 Wiesbaden (DE)**

(72) Erfinder: **Sommerer, Jürgen, Langegärten 7,**
**D-6229 Rauenthal (DE)**
Erfinder: **Hagens, Hajo, Guldenweg 12,**
**D-6200 Wiesbaden-Auringen (DE)**
Erfinder: **Kalner, Hartmut, Dr., Sauerbruchstrasse 1a,**
**D-6200 Wiesbaden 12 (DE)**

(74) Vertreter: **Brückner, Raimund, Dipl.-Ing., c/o**
**Didier-Werke AG Lessingstrasse 16-18,**
**D-6200 Wiesbaden (DE)**

# Beschreibung

Die Erfindung betrifft eine Meßwerterfassungseinrichtung an einem Durchlaufofenwagen mit einem Temperaturschutzgefäß, in dem eine batteriebetriebene Meßwertspeicherschaltung angeordnet ist, an die mehrere Meßfühler angeschlossen sind, welche außerhalb des Temperaturschutzgefäßes am Durchlaufofenwagen verteilt angeordnet sind.

Eine derartige Meßwerterfassungseinrichtung ist in der Literaturstelle Gaswärme international, Band 28 (1979), Heft 6/7, Seiten 411 bis 415 beschrieben. Mit einer solchen Meßwerterfassungseinrichtung werden beispielsweise Temperaturverläufe erfaßt und gespeichert, die an verschiedenen Stellen des Gutes auftreten, das mittels des Durchlaufofenwagens durch den Durchlaufofen gefahren wird. Nach dem Abschluß der Ofenreise wird die Meßwertspeicherschaltung an eine Auswerteeinrichtung angeschlossen, die die gespeicherten Meßwerte aus der Speicherschaltung ausliest. Durch eine solche Meßwerterfassungseinrichtung erübrigt sich während der Ofenreise eine Schleppkabelverbindung zu einer Anzeigestation und eine hochfrequente Signalübertragung aus dem Ofen.

An das Temperaturschutzgefäß werden hohe Anforderungen gestellt, da im Ofen Temperaturen über 1000°C auftreten können und die Temperatur der Meßwertspeicherschaltung etwa 70°C nicht übersteigen soll. Solche Temperaturschutzgefäße sind in der DE-PS 2 509 787 und in der DE-OS 2 825 111 beschrieben.

Der in dem Temperaturschutzgefäß für die batteriebetriebene Meßwertspeicherschaltung zur Verfügung stehende Raum ist begrenzt. Es kann deshalb keine Batterie großer Leistung verwendet werden. Zur Stromersparnis ist in der DE-AS 2 308 887 vorgeschlagen, die Batterie nur in gewissen Meßtakten an die Meßwertspeicherschaltung anzuschalten.

Nachteilig ist bei den bekannten Meßwerterfassungseinrichtungen, daß sie schon beim Anbau an den Durchlaufofenwagen eingeschaltet sind. Die Batterieentladung und die Meßwerterfassung beginnt schon in diesem frühen Zeitpunkt. Da in der Praxis zwischen der Montage der Meßwerterfassungseinrichtung am Durchlaufofenwagen und dessen Einfahrt in den Durchlaufofen eine lange Zeit verstreicht, die beispielsweise für die Beladung des Wagens und die Fahrt durch einen Trockner benötigt wird, ergibt sich eine an sich überflüssige Belastung der Batterie und gegebenenfalls eine Speicherung von nicht interessierenden Meßwerten.

Aufgabe der Erfindung ist es, eine Meßwerterfassungseinrichtung der eingangs genannten Art vorzuschlagen, die sich von außen kurz vor der Einfahrt in den Durchlaufofen starten läßt.

Erfindungsgemäß ist obige Aufgabe bei einer Meßwerterfassungseinrichtung der eingangs genannten Art dadurch gelöst, daß im Temperaturschutzgefäß eine Einschaltschaltung angeordnet ist, die bei einer an ihren Steuereingang angelegten Spannung die Meßwertspeicherschaltung einschaltet und daß an den Steuereingang eine Steuerleitung angeschlossen ist, deren Ende außen am Durchlaufofenwagen liegt.

Die Meßwertespeicherschaltung ist dabei nach ihrer Montage am Durchlaufofenwagen noch nicht aktiviert. Der Wagen läßt sich bei noch abgeschalteter Meßwertspeicherschaltung beladen, wobei die Meßfühler in den gewünschten Bereichen verteilt werden. Der beladene Wagen läßt sich beliebig lange abstellen oder durch einen Trockner fahren, ohne daß die Meßwertspeicherschaltung arbeitet. Während dieser Zeit erfolgt also weder ein Batterieverbrauch noch eine Meßwertspeicherung. Erst beim Einfahren des Durchlaufofenwagens in den Durchlaufofen wird an die Steuerleitung kurzzeitig eine Spannung gelegt. Durch den Spannungsimpuls spricht die Einschaltung an und schaltet die Meßwertspeicherschaltung ein. Die Batterie braucht also nur so ausgelegt zu werden, daß sie zur Stromversorgung der Meßwertspeicherschaltung während der vorher bekannten Dauer der Ofenreise ausreicht. Es kann dann auch die Speicherkapazität der Meßwertspeicherschaltung entsprechend der während der Ofenreise zu erfassenden Meßwerte ausgelegt werden.

Ein weiterer Vorteil besteht in der Möglichkeit, gleichzeitig verschiedene Meßwertgeber, vorzugsweise Thermoelemente, Druckmeßsonden etc., in einem Gerät zu verwenden. Hierbei werden sowohl gleichzeitig unterschiedliche Meßbereiche als auch die gleichzeitige Messung verschiedener physikalischer Parameter ermöglicht.

In bevorzugter Ausgestaltung der Erfindung ist die Einschaltschaltung so ausgelegt, daß sie bei einem zweitmaligen Anlegen einer Spannung die Meßwertspeicherschaltung abschaltet. Dadurch ist es möglich, die Meßwertspeicherschaltung nach Beendigung der Ofenreise von außen abzuschalten.

Weitere vorteilhafte Ausgestaltungen der Erfindung ergeben sich aus den Unteransprüchen und der folgenden Beschreibung eines Ausführungsbeispiels. In der Zeichnung zeigen:

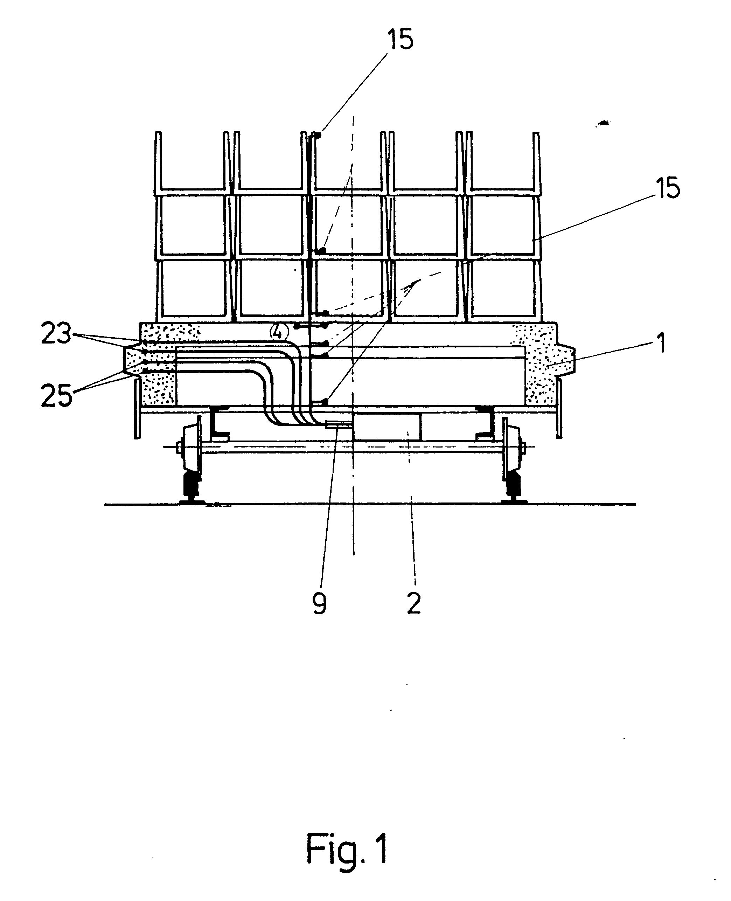

Fig. 1 einen Durchlaufofenwagen mit einer Meßwerterfassungseinrichtung, schematisch,

Fig. 2 einen Behälter für die Meßwerterfassungseinrichtung, und

Fig. 3 die Meßwerterfassungseinrichtung, schematisch.

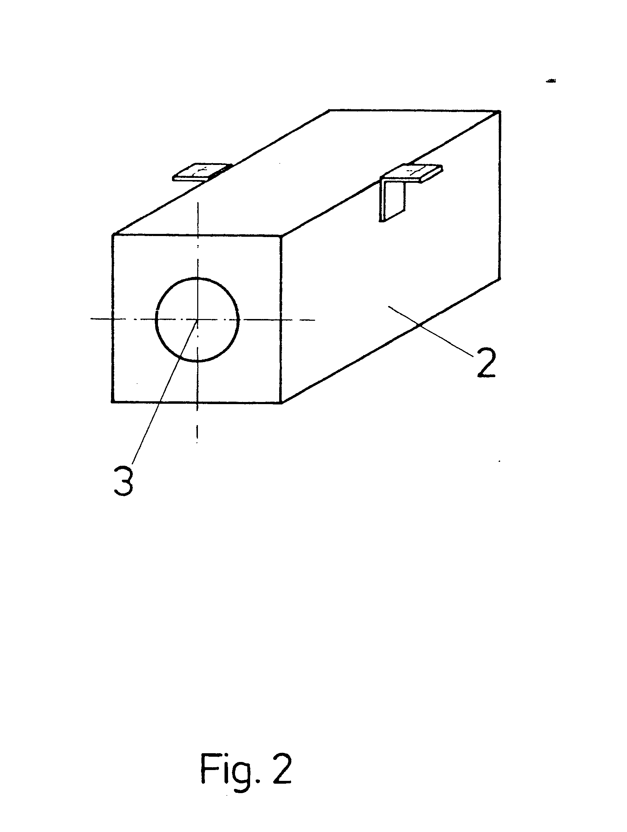

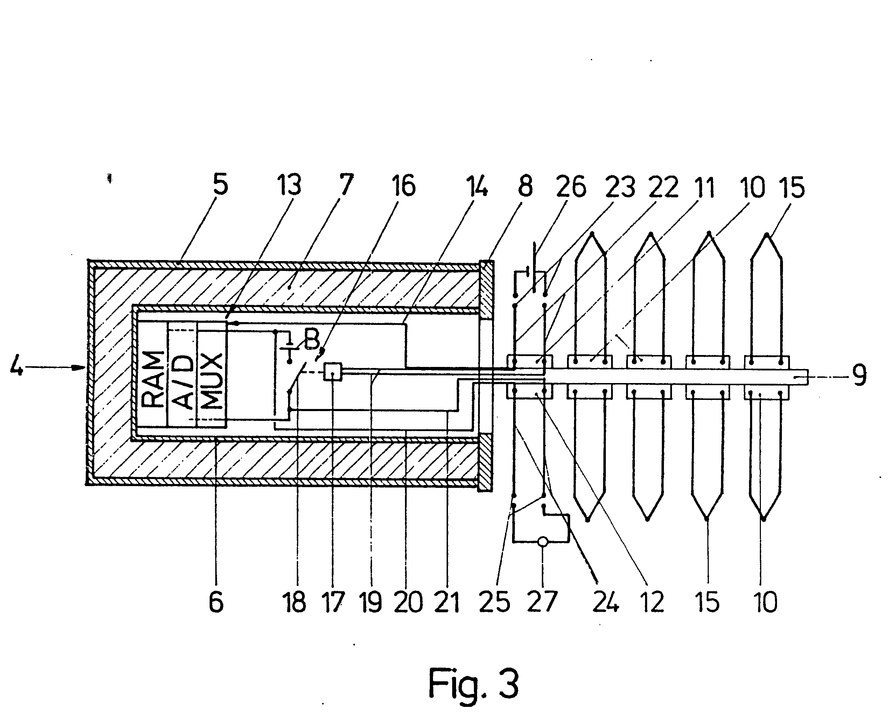

Unten an einem Durchlaufofenwagen 1 ist ein Blechbehälter 2 befestigt. In diesem ist ein von Isoliermaterial umgebener Wasserbehälter angeordnet, der eine nach außen offene zylindrische Einsteckkammer 3 aufweist (vgl. Fig. 2). In diese ist eine Meßwerterfassungseinheit 4 (vgl. Fig. 3) eingeschoben.

Die Meßwerterfassungseinheit 4 weist einen Außenmantel 5 und einen Innenmantel 6 auf. Zwischen dem Außenmantel 5 und dem Innenmantel 6 ist ein Dewar-Gefäß 7 angeordnet. An einem Flansch 8 ist eine Klemmenleiste 9 befestigt, an der acht Anschlußklemmen 10 für Temperaturfühler und zwei weitere Anschlußklemmen 11 und 12 angeordnet sind.

Im Innenmantel 6 ist eine Meßwertspeicherschaltung 13 angeordnet, zu deren Stromversorgung eine Batterie B vorgesehen ist. Die Meßwertspeicherschaltung 13 weist einen Multiplexer MUX auf, der über Meßwertleitungen 14 im Takt nacheinander die Temperaturen an an die Anschlußklemmen 10 ange-

schlossenen Temperaturfühlern 15 abtastet. Dem Multiplexer MUX ist ein Analog/Digital-Wandler A/D nachgeschaltet, der die digitalisierten Meßwerte in einem Speicher RAM ablegt.

In dem Innenmantel 6 ist eine Einschaltschaltung 16 angeordnet, die ein Relais 17 mit einem in Reihe zur Batterie B liegenden Schaltkontakt 18 aufweist. Das Relais 17 ist über Leitungen 19 an die Anschlußklemme 11 angeschlossen. Eine am einen Pol der Batterie B liegende Leitung 20 und eine am Schaltkontakt 18 liegende Leitung 21 sind an die Anschlußklemme 12 geführt.

An die Anschlußklemme 11 ist eine Steuerleitung 22 angeschlossen, die an dem Durchlaufofenwagen 1 so verlegt ist, daß ihre Enden 23 außen am Durchlaufofenwagen 1 an einer gut zugänglichen Stelle enden.

An die Anschlußklemmen 12 ist eine Kontrolleitung 24 angeschlossen, die neben der Steuerleitung 22 verlegt ist, so daß ihre Enden 25 neben den Enden 23 zugänglich sind.

Die Funktionsweise der beschriebenen Einrichtung ist etwa folgende:

Nach der Montage des Blechbehälters 2 am Durchlaufofenwagen 1 wird die Meßwerterfassungseinheit 4 in die Einsteckkammer 3 eingesetzt. Anschließend werden die Temperaturfühler 15 an den vorgesehenen Meßstellen angebracht und mit den Anschlußklemmen 10 verbunden. Der Durchlaufofenwagen 1 läßt sich dann beladen. Die Meßwertspeicherschaltung 13 arbeitet noch nicht, da der Schaltkontakt 18 offen ist.

Bevor der Durchlaufofenwagen 1 in den Durchlaufofen eingefahren ist, wird kurzzeitig eine Batterie 26 oder eine andere zum Schalten des Relais 17 geeignete Spannungsquelle an die gut zugänglichen Enden 23 gelegt. Dadurch schließt das Relais 17 den Schaltkontakt 18, so daß nunmehr die Meßwertspeicherschaltung 13 arbeitet. Die Batterie 26 wird dann wieder weggenommen. Sie macht die Ofenreise nicht mit. Günstig an dem Schalten des Relais 17 durch die externe Batterie 26 ist auch, daß das Relais 17 die interne Batterie B nicht belastet.

Soll danach vor der Ofenreise kontrolliert werden, ob der Schaltkontakt 18 tatsächlich geschlossen ist, dann läßt sich kurzzeitig zwischen die Enden 25 der Kontrolleitung 24 eine Leuchtdiode 27 legen. Leuchtet sie auf, dann besteht Gewißheit, daß die Meßwertspeicherschaltung 13 arbeitet.

Nach der Ofenreise kann erneut die Batterie 26 an die Enden 23 gelegt werden. Dadurch öffnet das Relais 17 den Schaltkontakt 18, so daß die Meßwertspeicherschaltung 13 jetzt abgeschaltet ist.

Um die während der Ofenreise erfaßten Meßwerte auszuwerten, wird die Meßwerterfassungseinheit 4 demontiert und der Speicher RAM wird an eine Auswerteschaltung angeschlossen.

## Patentansprüche

1. Meßwerterfassungseinrichtung an einem Durchlaufofenwagen mit einem Temperaturschutzgefäß, in dem eine batteriebetriebene Meßwertspeicherschaltung angeordnet ist, an die mehrere Meßfühler angeschlossen sind, welche außerhalb des Temperaturschutzgefäßes am Durchlaufofenwagen verteilt angeordnet sind, dadurch gekennzeichnet, daß im Temperaturschutzgefäß (2 bis 7) eine Einschaltschaltung (16) angeordnet ist, die bei einer an ihren Steuereingang angelegten Spannung die Meßwertspeicherschaltung (13) einschaltet, und daß an den Steuereingang eine Steuerleitung (19, 22) angeschlossen ist, deren Enden (23) außen am Durchlaufofenwagen (1) liegen.

2. Meßwerterfassungseinrichtung nach Anspruch 1, dadurch gekennzeichnet, daß die Einschaltschaltung (16) so ausgelegt ist, daß sie bei einem zweitmaligen Anlegen einer Spannung die Meßwertspeicherschaltung (13) abschaltet.

3. Meßwerterfassungseinrichtung nach Anspruch 1 oder 2, dadurch gekennzeichnet, daß die Einschaltschaltung (16) ein Relais (17) mit einem in Reihe zur Batterie (B) der Meßwertspeicherschaltung (13) liegenden Schaltkontakt (18) aufweist.

4. Meßwerterfassungseinrichtung nach einem der vorhergehenden Ansprüche, dadurch gekennzeichnet, daß eine Kontrolleitung (20, 21, 24) an die Meßwertspeicherschaltung (13) angeschlossen ist und daß Enden (25) der Einschaltkontrolleitung (20, 21, 24) neben den Enden (23) der Steuerleitung (22) liegen.

5. Meßwerterfassungseinrichtung nach einem der vorhergehenden Ansprüche, dadurch gekennzeichnet, daß außen an der abnehmbaren Meßwerterfassungseinheit (4) eine Klemmleiste (9) befestigt ist, an deren Anschlußklemmen (10, 11, 12) die Meßfühler (15), die Steuerleitung (22) und gegebenenfalls die Kontrolleitung (24) angeschlossen sind.

6. Meßwerterfassungseinrichtung nach einem der vorhergehenden Ansprüche, dadurch gekennzeichnet, daß sie mindestens zwei Meßbereiche aufweist.

7. Meßwerterfassungseinrichtung nach einem der vorhergehenden Ansprüche, dadurch gekennzeichnet, daß sie verschiedene Meßsysteme für die Messung verschiedener physikalischer Parameter aufweist.

## Claims

1. Device for recording measured values on a permanent-heating furnace carriage with a temperature protective container in which a battery operated measured value storage circuit is arranged to which a plurality of measurement sensors are connected which are arranged on the permanent-heating furnace carriage outside the temperature protective container, characterised in that arranged in the temperature protective container (2 to 7) there is a starter circuit (16) which, when a voltage is applied to its control input, switches on the measured value storage circuit (13) and that connected to the control input is a control line (19, 22) whose ends (23) are external on the permanent-heating furnace carriage (1).

2. Device for recording measured values as claimed in Claim 1, characterised in that the starter circuit (16) is so constructed that it switches off the measured value storage circuit (13) on the second application of a voltage.

3. Device for recording measured values as claimed in Claim 1 or 2, characterised in that the starter circuit (16) has a relay (17) with a switching contact (18) in series with the battery (B) of the measured value storage circuit (13).

4. Device for recording measured values as claimed in one of the preceding claims, characterised in that a check line (20, 21, 24) is connected to the measured value storage circuit (13) and that ends (25) of the starter check line (20, 21, 24) are adjacent the ends (23) of the control line (22).

5. Device for recording values as claimed in one of the preceding claims, characterised in that connected externally to the removable unit (4) for recording measured values there is a connector strip (9) to the terminal connectors (10, 11, 12) of which the measurement sensors (15), the control line (22) and optionally the check line (24) are connected.

6. Device for recording measured values as claimed in one of the preceding claims, characterised in that it has at least two measurement regions.

7. Device for recording measured values as claimed in one of the preceding claims, characterised in that it has different measuring systems for measuring different physical parameters.

**Revendications**

1. Dispositif de saisie de mesures sur un chariot de four continu, comportant un récipient de protection contre la température dans lequel est disposé un circuit de mémoire de valeurs mesurées alimenté par batterie, auquel sont raccordés plusieurs capteurs de mesure disposés de manière à être répartis sur le chariot de four continu, à l'extérieur du récipient de protection contre la température, caractérisé en ce qu'il est disposé, dans le récipient de protection contre la température (2 à 7), un circuit de connexion (16) mettant en circuit le circuit de mémoire des valeurs mesurées (13) lorsqu'une tension est appliquée à son entrée de commande, et en ce qu'à l'entrée de commande, il est raccordé une ligne de commande (19, 22) dont les extrémités (23) sont situées à l'extérieur du chariot de four continu (1).

2. Dispositif de saisie de mesures selon la revendication 1, caractérisé en ce que le circuit de connexion (16) est conçu de façon à mettre hors service le circuit de mémoire des valeurs mesurées lors d'une application pour la deuxième fois d'une tension.

3. Dispositif de saisie de mesures selon la revendication 1 ou 2, caractérisé en ce que le circuit de connexion (16) présente un relais (17) avec un contact de commutateur (18) placé en série avec la batterie (B) du circuit de mémoire des valeurs mesurées (13).

4. Dispositif de saisie de mesures selon l'une des revendications précédentes, caractérisé en ce qu'une ligne de contrôle (20, 21, 24) est raccordée au circuit de mémoire de valeurs mesurées (13) et que les extrémités (25) de la ligne de contrôle de mise en circuit (20, 21, 24) sont situées à côté des extrémités (23) de la ligne de commande (22).

5. Dispositif de saisie de mesures selon l'une des revendications précédentes, caractérisé en ce qu'une barre à bornes (9) est fixée extérieurement sur l'unité amovible (4) de saisie de mesures, barre aux bornes de raccordement (10, 11, 12) de laquelle sont raccordés les capteurs de mesure (15), la ligne de commande (22) et, le cas échéant, la ligne de contrôle (24).

6. Dispositif de saisie de mesures selon l'une des revendications précédentes, caractérisé en ce qu'il présente au moins deux zones de mesure.

7. Dispositif de saisie de mesures selon l'une des revendications précédentes, caractérisé en ce qu'il présente différents systèmes de mesure pour mesurer différents paramètres physiques.

# Fig. 1

Fig. 2

Fig. 3

EP 0 231 431 B1